# EUROPEAN PATENT APPLICATION

(11) **EP 3 961 196 A1**
(43) Date of publication of application: **02.03.2022**
(21) Application number: 19926192.6
(22) Date of filing: 27.12.2019
(51) Int. Cl.: G01N 21/88, H04N 5/225, H04N 9/09

(54) **IMAGING DEVICE**

(30) Priority: 22.04.2019 JP 2019081320
(71) Applicant: JAI Ltd., Yokohama-shi, Kanagawa 221-0052 (JP)
(72) Inventor: WATABE, Masao, Yokohama-shi, Kanagawa 221-0052 (JP); TAJIMA, Yoshio, Yokohama-shi, Kanagawa 221-0052 (JP); ASANO, Nagatake, Yokohama-shi, Kanagawa 221-0052 (JP); TAKAHASHI, Hiroaki, Yokohama-shi, Kanagawa 221-0052 (JP)
(74) Representative: Godemeyer Blum Lenze Patentanwälte Partnerschaft mbB - werkpatent
(86) International application number: PCT/JP2019/051454
(87) International publication number: WO 2020/217595

(57) **Abstract**

An imaging device is provided that can highly precisely and effectively inspect the surface and geometrical features of a target object. The imaging device includes a first optical system, a plurality of polarizer, a plurality of solid-state image sensors, and a signal processing unit. The first optical system includes a plurality of prisms and a plurality of optical filters. A first prism, a second prism, and a third prism of the prisms are disposed next to each other in this order. A first optical filter of the optical filters is disposed between the first prism and the second prism, and a second optical filter is disposed between the second prism and the third prism. The polarizers are disposed between the respective solid-state image sensors and the light emerging faces of the respective prisms, and transmit the emerging light fluxes from the light emerging faces to different polarization directions to generate polarized images.

## Description

### TECHNICAL FIELD

The present invention relates to an imaging device, in particular, technology of an imaging device including a prism.

### BACKGROUND ART

In recent years, the use of imaging devices has been studied as means of detecting dust or foreign matter on target objects to be inspected in production lines of factories, for example. In this case, the imaging devices take images of the target objects on the production lines to detect dust and foreign matter adhering on the target objects from the captured image.

There are various types of imaging device for taking images of the target object. A typical example of the imaging device is a prism camera including a prism.

For example, a prism camera equipped with a prism unit is proposed, where the prism unit includes a multi-sensor wavelength split prism and fixing plates fixed to both sides of the multi-sensor wavelength split prism (see PTL 1).

### CITATION LIST

### [Patent Literature]

[PTL1] Japanese Unexamined Patent Application Publication No. 2018-93342

### SUMMARY OF INVENTION

### TECHNICAL PROBLEM

The prism camera (the imaging device) provided with a wavelength split prism can split light. Meanwhile, inspections target objects to be inspected in production lines of factories, for example, have been performed through multiple imaging operations to confirm the absence of dust and/or foreign matter on the objects. Such operations inhibit precise and efficient inspections of objects in some cases.

The main object of the present invention, which has been completed in view of such problems, is to provide an imaging device that can inspect the surface and shape characteristics of a target object to be inspected more accurately and efficiently.

### SOLVING MEANS

As a result of diligent research to solve the above-mentioned problems, the present inventors have successfully inspected the surface and the shape characteristics of the target object more accurately and efficiently and the present invention has been completed.

The present invention provides an imaging device comprising:
a first optical system;
a plurality of polarizers;
a plurality of solid-state image sensors; and
a signal processing unit,
the first optical system comprising:
   a plurality of prisms including a first prism, a second prism, and a third prism; and
   a plurality of optical filters including a first optical filter and a second optical filter, wherein
the first prism, a second prism, and a third prism are disposed next to each other in this order, each prism has a light incident face, a transflective face, and a light emerging face,
the first optical filter is disposed between the first prism and the second prism,
the second optical filter is disposed between the second prism and the third prism,
the first optical filter splits light incident on the light incident face of the first prism into a first reflected light flux and a first transmitted light flux, the first reflected light flux is oriented to the light incident face of the first prism, is totally reflected on the light incident face, and is emitted through the light emerging face of the first prism, and the first transmitted light flux passes through the first optical filter,
the second optical filter splits the first transmitted light flux incident on the light incident face of the second prism into a second reflected light flux and a third transmitted light flux, the second light flux is oriented to the light incident face of the second prism, is totally reflected on the light incident face of the second prism, and is emitted through the light emerging face of the second prism, and the third transmitted light flux passes through the second optical filter and the light emerging face of the third prism,
the polarizers are disposed between the respective solid-state image sensors and the light emerging faces of the respective prisms, and transmit the light fluxes emerging from the respective light emerging faces to different polarization directions,
the solid-state image sensors convert the respective transmitted light fluxes from the respective polarizers into electrical signals, and
the signal processing unit receives the electrical signals from the respective solid-state image sensors to generate polarized light images.

The present invention also provides an imaging device comprising:
a second optical system;
at least one polarizer;
a beam splitter;
a plurality of solid-state image sensors; and
a signal processing unit,
the second optical system comprising a fourth prism having a light incident face, a light emerging face and a transflective face, and a third optical filter,
the fourth prism and the beam splitter are disposed next to each other in this order,
the third optical filter is disposed between the fourth prism and the beam splitter,
the third optical filter splits light incident on the light incident face of the fourth prism into a fourth reflected light flux and a fourth transmitted light flux, the fourth reflected light flux is oriented to the light incident face of the fourth prism, is totally reflected on the light incident face, and is emitted through the light emerging face of the fourth prism,
the beam splitter splits the fourth transmitted light flux into P polarized light and S polarized light,
the polarizer is disposed between the light emerging face of the fourth prism and one of the solid-state image sensors, and transmits the fourth light flux from the light emerging face in a predetermined polarization direction,
each of the solid-state image sensors converts one of the P polarized light, the S polarized light, and the transmitted light with a predetermined polarization direction to electrical signals,
the signal processing unit receives the electrical signals from the respective solid-state image sensors to generate polarized light images.

The present invention further provides an imaging device, comprising:
a color separation optical system;
a beam splitter;
a plurality of solid-state image sensors; and
a signal processing unit, wherein
the color separation optical system includes a plurality of prisms including a fifth prism and a sixth prism, and a plurality of wavelength selection filters including a first wavelength selection filter and a second wavelength selection filter,
the fifth prism and the sixth prism are disposed next to each other in this order, each prism has a light incident face, a transflective face, and a light emerging face,
the first wavelength selection filter is disposed between the fifth prism and the sixth prism,
the second wavelength selection filter is disposed between the sixth prism and the beam splitter,
the first wavelength selection filter splits light incident on the light incident face of the fifth prism into a reflected light flux in a first wavelength region and a transmitted light flux, the reflected light flux in the first wavelength region is oriented to the light incident face of the fifth prism, is reflected on the light incident face of the fifth prism, and is emitted through the light emerging face of the fifth prism, and the first wavelength selection filter transmits the transmitted light flux in a wavelength region other than the first wavelength region,
the second wavelength selection filter splits the transmitted light flux into a reflected light flux in a second wavelength region and a transmitted light flux in a third wavelength region, the reflected light flux in the second wavelength region is reflected on the light incident face of the sixth prism and is emitted through the light emerging face of the sixth prism, while the second wavelength selection filter transmits the transmitted light in the third wavelength region,
the beam splitter splits the transmitted light in the third wavelength region into P polarized light and S polarized light,
each of the solid-state image sensors converts one of the P polarized light, the S polarized light, the light flux in the first wavelength region, and the light flux in the second wavelength region to electrical signals, and
the signal processing unit receives the electrical signals from the respective solid-state image sensors to generate polarized light images.

### ADVANTAGEOUS EFFECTS

The present invention enables the surfaces and shape characteristics of target objects to be more precisely and efficiently inspected. The present invention has further advantageous effects described in the specification in addition to such advantageous effects.

### BRIEF DESCRIPTION OF DRAWINGS

FIG. 1 is a perspective view schematically illustrating the appearance of an imaging device in accordance with a first embodiment of the invention.
FIG. 2 is a side view schematically illustrating the imaging device in accordance with the first embodiment of the present invention.
FIG. 3 is a front view schematically illustrating a sensor board in accordance with the first embodiment of the present invention.
FIG. 4 is a schematic diagram of the imaging device in accordance with the first embodiment of the present invention.
FIG. 5 is a table explaining, with figures, an example of a polarized image captured by the imaging device in accordance with the first embodiment of the present invention.
FIG. 6 is a schematic diagram of an imaging device in accordance with a second embodiment of the present invention.
FIG. 7 is a schematic diagram of an imaging device in accordance with a third embodiment of the present invention.

### EMBODIMENT OF INVENTION

Preferred embodiments for carrying out the present invention will now be described with reference to the accompanying drawings. These embodiments describe typical examples of the present invention, and should not be construed to limit the scope of the present invention.

### <1. First embodiment (Example imaging device 1)>

### [Overall configuration]

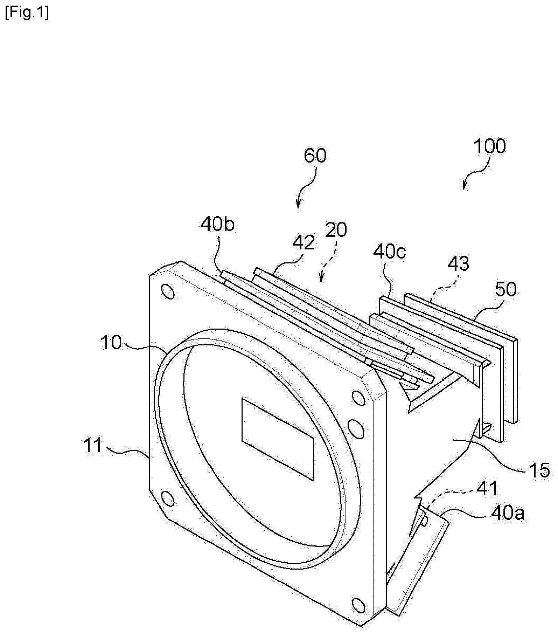

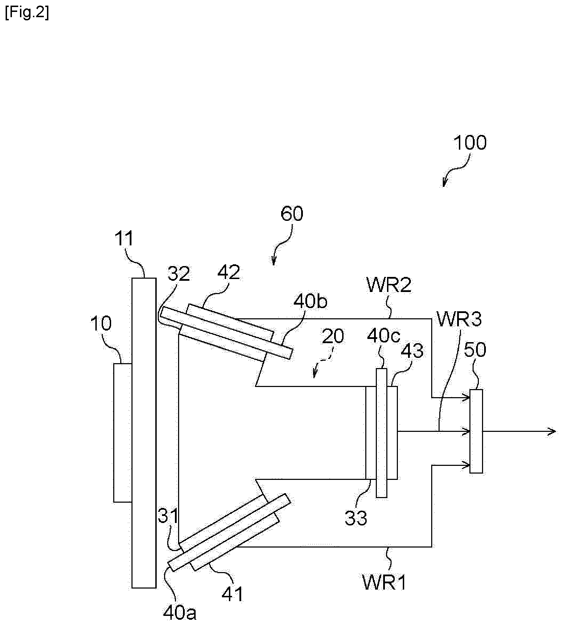

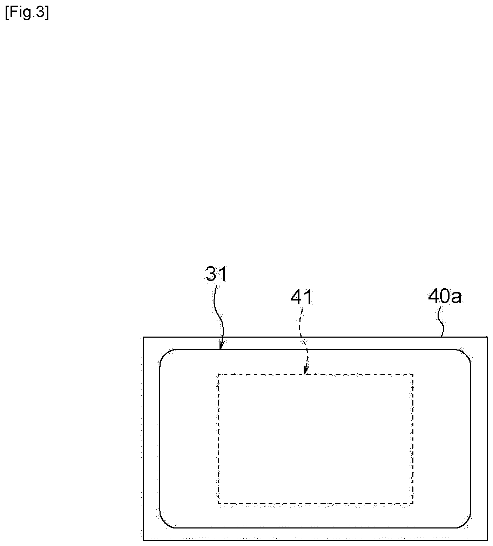

FIG. 1 is a perspective view schematically illustrating the appearance of the imaging device (prism camera) 100 in accordance with a first embodiment of the present invention. FIG. 2 is a side view schematically illustrating the imaging device (prism camera) 100 in accordance with the first embodiment of the present invention. FIG. 3 is a front view schematically illustrating a sensor board 40a in accordance with the first embodiment of the present invention.

The imaging device (prism camera) 100 in accordance with the first embodiment include a front panel 11 of an optical device and a prism unit 60, and a lens 10 is attached to the front panel 11. The prism unit 60 includes a first optical system 20, three polarizers 31, 32, and 33, three solid-state image sensors 41, 42, and 43, and a signal processing unit 50. Although three polarizers and three solid-state image sensors are provided in this embodiment, the numbers of these elements are not of significance. For example, any combination of two or more polarizers and two or more solid-state image sensors is allowable.

### [Front panel of optical device]

The front panel 11 of the optical device is attached to the prism unit 60. The front panel 11 of the optical device is provided with a lens 10 of the prism camera, which is an example of the imaging device.

### [Prism unit]

As shown in FIGS. 1 and 2, the prism unit 60 in accordance with the first embodiment includes the first optical system 20, the polarizers 31, 32, and 33, the solid-state image sensors 41, 42, and 43, and the signal processing unit 50.

The first optical system 20 is provided with three sensor boards 40a, 40b, and 40c. The first optical system 20 is provided with a plurality of prisms and a plurality of optical filters, which will be described below in detail.

The sensor board 40a is provided with a polarizer 31 and a solid-state image sensor 41 (see FIG.3). As shown in FIG. 2, the polarizer 31 attached to the sensor board 40a is in contact with the first optical system 20. Similarly, the sensor board 40b is provided with a polarizer 32 and a solid-state image sensor 42. The polarizer 32 attached to the sensor board 40b is in contact with the first optical system 20. The sensor board 40c is provided with a polarizer 33 and a solid-state image sensor 43. The polarizer 33 attached to the sensor board 40c in in contact with the first optical system 20.

The polarizer 31, 32, and 33 transmit respective light fluxes in different directions. For example, the polarizer 31 has a polarization direction of 45°, the polarizer 32 has a polarization direction of 90°, and the polarizer 33 has a polarization direction of 0°. Besides such a combination of polarization directions 0°, 45°, and 90°, any other combination of, for example, 60°, 120°, and 135° is also available.

The solid-state image sensor 41 converts the light passing through the polarizer 31 into electrical signals and transmits the signals through a lead line WR1 to the signal processing unit 50. The solid-state image sensor 42 converts the light passing through the polarizer 32 into electrical signals and transmits the signals through a lead line WR2 to the signal processing unit 50. The solid-state image sensor 43 also converts the light passing through the polarizer 33 into electrical signals and transmit the electrical signals through a lead line WR3 to the signal processing unit 50.

The solid-state image sensors 41, 42, and 43 may each be a line sensor or an area sensor. In another embodiment, each of the solid-state image sensors 41, 42, and 43 may be an image sensor made of a complementary metal oxide semiconductor (CMOS) or a charge coupled device (CCD).

The signal processing unit 50 receives electrical signals from the solid-state image sensors 41, 42, and 43 to generate polarized light images. The signal processing unit 50 may be, for example, a dedicated or general-purpose central processing unit (CPU), or includes an application specific integrated circuit (ASIC) and/or a programmable logic device, for example, a simple programmable logic device (SPLD), a complex programmable logic device (CPLD), or a field programmable gate array (FPGA).

The prism unit 60 includes fixation plates 15 on side faces of the first optical system 20 (see FIG. 1), and these fixation plates 15 fix the prisms and the optical filters of the first optical system 20. Each fixation plate 15 is fixed to the sensor board 40a with an adhesive. Furthermore, each fixation plate 15 is fixed to the sensor board 40b and the sensor board 40c with an adhesive.

### [Detailed description of prism unit]

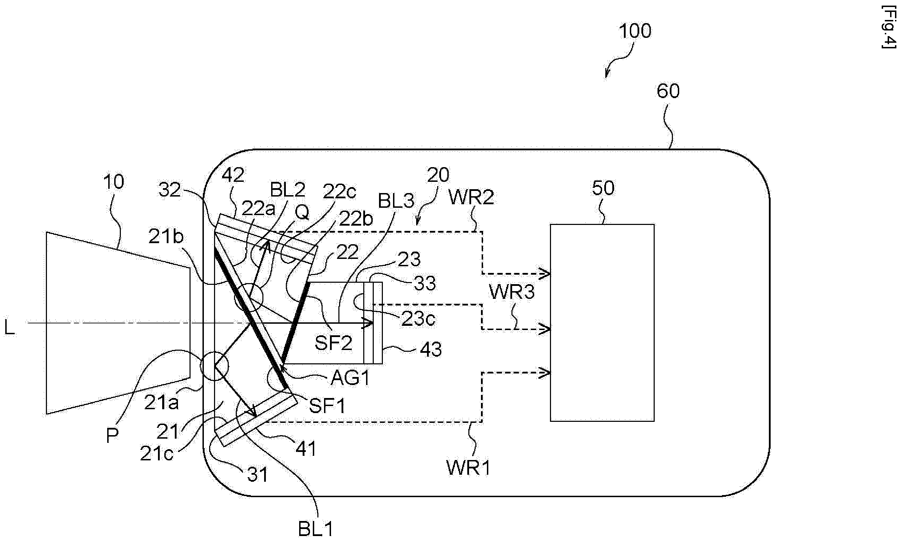

FIG. 4 is a detailed schematic diagram of the prism unit 60. FIG. 4 is a schematic diagram of the imaging device (prism camera) 100 in accordance with the first embodiment of the present invention.

As shown in FIG. 4, the prism unit 60 includes the first optical system 20 and the signal processing unit 50. The first optical system 20 of the prism unit 60 includes a first prism 21, a second prism 22, a third prism 23, a first optical filter SF1, and a second optical filter SF2.

In the first optical system 20, the first prism 21, the second prism 22, and the third prism 23 are disposed next to each other in this order. In the first optical system 20, the first optical filters SF1 is disposed between the first prism 21 and the second prism 22, while the second optical filter SF2 is disposed between the second prism 22 and the third prism 23.

The first optical filter SF1 is formed by vapor deposition on a transflective face 21b of the first prism 21, while the second optical filter SF is formed by vapor deposition on a transflective face 22b of the second prism 22. The first optical filter SF1 and second optical filter SF2 may be neutral density (ND) filters.

### [Function of prism unit]

With reference to FIG. 4, the imaging device (prism camera) 100 in accordance with the first embodiment is disposed on an optical path L of the light from a target object (not shown in the drawing).

The light reflected by the target object (not shown in the drawing) propagates through a lens 10 on the optical path L and is incident on a light incident face 21a of the first prism 21 of the first optical system 20.

The first optical filter SF1 splits the light incident on the light incident face 21a of the first prism 21 into a reflected light flux (first light flux BL1) and a transmitted light flux, and the first reflected light flux BL1 is totally reflected by the light incident face 21a of the first prism 21 and is emitted from a light emerging face 21c of the first prism 21. The first optical filter SF1 transmits the rest of the incident light flux.

For example, the first optical filter SF1 emits 33% of the light incident on the light incident face 21a of the first prism 21 through the light emerging face 21c of the first prism 21. The first optical filter SF1 transmits 66% of the light incident on the light incident face 21a and the transmitted light is incident on a light incident face 22a of the second prism 22. The rate of light emerging from the light emerging surface 21c of the first prism 21 should not be limited to 33%, and may be any rate. The rate of light incident on the incident surface 22a of the second prism 22 should not be limited to 66%, and may be any rate.

In detail, the first optical filter SF1 reflects the first light flux BL1 to the light incident face 21a of the first prism 21, such that the first light flux BL1 (see region P in FIG. 4) is totally reflected by the light incident face 21a of the first prism 21 and then passes through the light emerging face 21c of the first prism 21.

The light incident face 21a of the first prism is coated with, for example, a metal layer to totally reflect the incident first light flux BL1.

The second optical filter SF2 splits the transmitted light flux passing through the first optical filter SF1 into a second light flux BL2 (reflected light) and a third light flux BL3 (transmitted light), and the second light flux BL2 (the reflected light) is totally reflected by the light incident face 22a of the second prism 22 and is emitted from a light emerging face 22c of the second prism 22. The second optical filter SF2 transmits the third light flux BL3 to a light emerging face 23c of the third prism 23.

For example, the second optical filter SF2 emits 50% of the incident light incident on the light incident face 22a, in other words, 33% of the incident light incident on the light incident face 21a of the fist prism 21, through the light emerging face 22c of the second prism 22. The second optical filter SF2 transmits 50% of the incident light, in other words, 33% of the incident light incident on the light incident face 21a of the first prism 21, and the transmitted light is incident on the light incident face 23a of the third prism 23. The rate of light emerging from the light-emerging surface 22c of the second prism 22 should not be limited to 50%, and may be any rate. The rate of light incident on the surface 23a of the third prism 23 should not be limited to 50%, and may be any rate.

An air gap AG1 is defined between the first optical filter SF1 and the second prism 22.

In this case, the second optical filter SF2 reflects the second light flux BL2 to the light incident face 22a of the second prism 22, such that the second light flux BL2 (see region Q in FIG. 4) is totally reflected on the light incident face 22a of the second prism 22, and then passes through the light emerging face 22c of the second prism 22.

The light incident face 22a of the second prism 22 is coated with, for example, a metal layer to totally reflect the incident second light flux BL2.

The polarizer 31 is disposed between the light emerging face 21c of the first prism 21 and the solid-state image sensor 41 and polarizes the light emerging from the light emerging face 21c in a direction angle of 45°. The polarizer 32 is disposed between the light emerging face 22c of the second prism 22 and the solid-state image sensor 42 polarizes the light emerging from the face 22c in a direction angle of 90°. The polarizer 33 is disposed between the light incident face 23c of the third prism 23 and the solid-state image sensor 43 and polarizes the light emerging from the face 23c in a direction angle of 0°. The imaging device (prism camera) 100 in accordance with the first embodiment has three polarizers as described above.

The solid-state image sensor 41 converts the polarized light with a polarization direction of 45° from the polarizer 31 into electric signals. The solid-state image sensor 42 converts the polarized light with a polarization direction of 90° from the polarizer 32 into electric signals. The solid-state image sensor 43 converts the polarized light with a polarization direction of 0° from the polarizer 33 into electric signals.

The signal processing unit 50 receives the electric signals from the solid-state image sensors 41, 42, and 43 to generate a polarized light image.

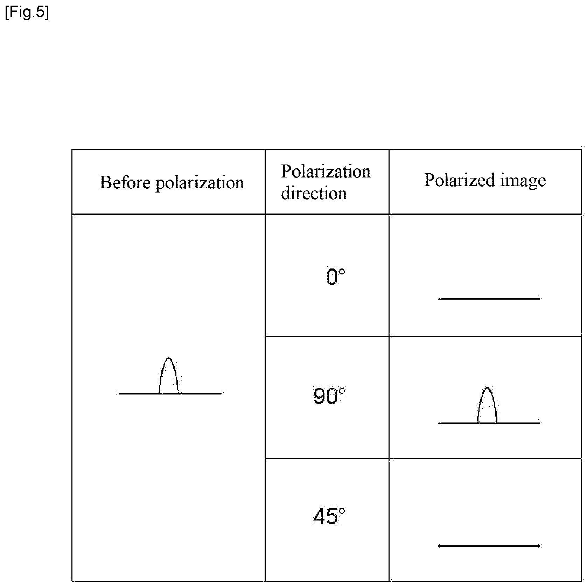

FIG. 5 illustrates an example polarized light image taken by the imaging device (prism camera) 100 in accordance with the first embodiment. FIG. 5 is a table illustrating an example polarized light image taken by the imaging device (prism camera) 100 in accordance with the first embodiment.

An example image before polarization is illustrated on the column "Before polarization" in FIG. 5. This image is an ordinary image captured by the imaging device (prism camera) 100.

The transmitted polarized light image with a polarization direction of 0° from the ordinary image is shown on the column "0°" of the column "Polarization direction". The transmitted polarized light image with a polarization direction of 90° from the ordinary image is also shown on the column "90°" of the column "Polarization direction". Furthermore, the transmitted polarized light image with a polarization direction of 45° from the ordinary image is shown on the column "45°" of the column "Polarization direction".

Although the polarized image shown on each "Image after polarization" corresponding to "Polarization direction" is the same as the outside image of the target object, the polarized image may be another image different from the outside image of the target object.

For example, the polarization direction of 0° indicates that only the component with a polarization direction of 0° can be extracted. In the case shown in the table, no polarized image is displayed. The polarization direction of 90° indicates that only the component with a polarization direction of 90° can be extracted. In the case shown in the table, a polarized image with a polarization component of 90° can be displayed. The polarization direction of 45° indicates that only the component with a polarization direction of 45° can be extracted. In the case shown in the table, no polarized image is displayed.

The imaging device (prism camera) 100 in accordance with the first embodiment can display, for example, a polarized light image that includes a component with a polarization direction of 0° and a polarized light image that includes a component with a polarization direction of 90° at the same time, or a polarized image that includes a component with a polarization direction of 90° and a polarized light image that includes a component with a polarization direction of 45° at the same time, shown in FIG. 5.

If a wrapped test sample is inspected, part of the light reflected from the surface wrap is extracted from a polarization direction to capture an image of the content in the wrap. In detail, the imaging device (prism camera) 100 in accordance with the first embodiment cab extract a component with a polarization direction from the reflected light to visualize the content in a transparent container. In an alternative embodiment, a polarized image with a predetermined polarization direction is extracted from the light reflected by a windshield of a vehicle. A person or persons in the vehicle can be observed from the polarized image, even if the windshield is dazzling with reflected light.

The imaging device (prism camera) 100 can also determine the shape of a wrap using transmitted polarized light in a predetermined direction from part of the reflected light. For example, the imaging device (prism camera) 100 can determine the shape of a transparent PET bottle using transmitted polarized light in a predetermined direction from part of the reflected light. The imaging device (prism camera) 100 can also capture an image of only foreign matter contained in a mass of cotton in inspection of the foreign matter.

Since the imaging device (prism camera) 100 of the first embodiment can capture two or more polarized light images with different polarization directions through one image taking operation, specific region(s) of the nonpolarized light image can be emphasized. The imaging device (prism camera) 100 in accordance with the first embodiment can thus determine the shape, distortion, and any other geometrical feature of the target object.

The imaging device (prism camera) 100 in accordance with the first embodiment can accordingly produce different images from different polarization directions using one image of a single target object.

As described above, the imaging device (prism camera) 100 in accordance with the first embodiment includes three polarizers 31, 32, and 33 that can orient light beams emerging from the respective light emerging faces 21c, 22c, and 23c of the first prism 21, the second prism 22, and the third prism 23 in predetermined directions.

The imaging device (prism camera) 100 in accordance with the first embodiment can capture different images with different polarization directions from a single target object, and thus can precisely and effectively determine the surface and geometric features of the target object.

The imaging device (prism camera) 100 in the first embodiment has an air gap AG1 defined between the first optical filter SF1 and the second prism 22. However, the air gap is not essential. Thus, the imaging device (prism camera) 100 in accordance with the first embodiment may have no air gap AG1 between the first optical filter SF1 and the second prism 22. In such a case, the light incident face 22a of the second prism is coated with a metal film that can totally reflect the second light flux BL2.

In the imaging device (prism camera) 100 in accordance with the first embodiment, the polarizers 31, 32, and 33 may be each provided with a trimming filter or a band-pass filter, which can transmit only light with a predetermined wavelength band.

### <2.Second embodiment (Example imaging device 2)>

The imaging device in accordance with a second embodiment includes a second optical system, at least one polarizer, a beam splitter, a plurality of solid-state image sensors, and a signal processing unit. The second optical system includes a fourth prism and a third optical filter, where the fourth prism and the beam splitter are disposed next to each other in this order. A third optical filter is disposed between the fourth prism and the beam splitter. The third optical filter splits the incident light incident on a light incident face of the fourth prism into a fourth reflected light flux and a transmitted light flux. The fourth reflected light flux is totally reflected by the light incident face of the fourth prism and is emitted from a light emerging face of the fourth prism. The beam splitter divides the transmitted light into a P polarized light flux and an S polarized light flux. A polarizer is disposed between a light emerging face of the fourth prism and each of the solid-state image sensors to transmit the fourth light flux from the fourth prism in a predetermined polarization direction. Each of the solid-state image sensors converts one of the P polarized light, the S polarized light, and the transmitted light with the predetermined polarization direction into electrical signals. The signal processing unit receives electrical signals from the solid-state image sensors to generate a polarized light image.

Like the imaging device in accordance with the first embodiment, the imaging device in accordance with the second embodiment can capture different images with different polarization directions from a single target object, and thus can inspect the surface and geometrical feature of the target object more precisely and effectively.

The overall configuration of the imaging device in accordance with the second embodiment of the present invention is substantially the same as that of the imaging device in accordance with the first embodiment. It is noted that the beam splitter is a type of polarizer.

### [Detail of prism unit]

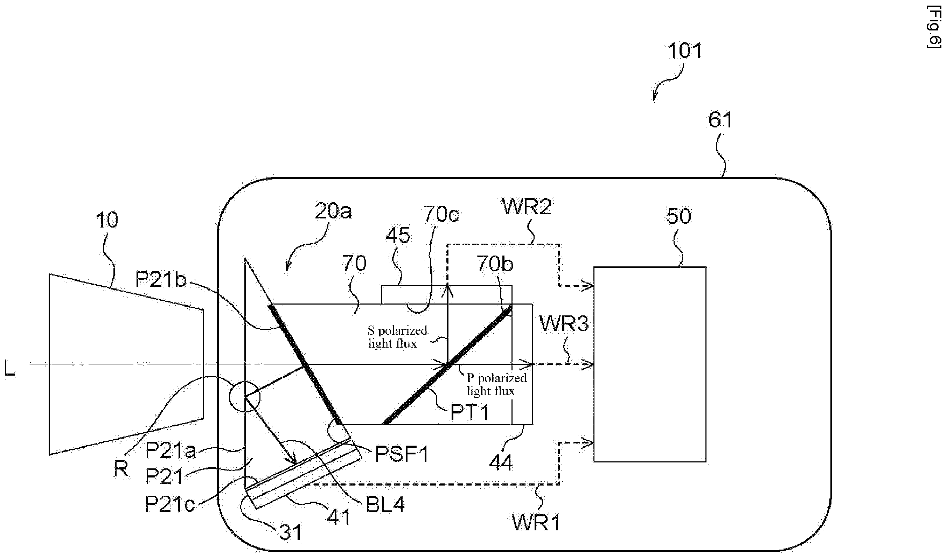

FIG. 6 is a schematic diagram of the imaging device (prism camera) 101 in accordance with the second embodiment of the present invention.

The imaging device (prism camera) 101 in accordance with the second embodiment includes a lens 10 and a prism unit 61. The prism unit 61 includes a second optical system 20a, at least one polarizer 31, a beam splitter 70, three solid-state image sensors 41, 44, and 45, and a signal processing unit 50.

The imaging device (prism camera) 101 in accordance with the second embodiment differs from the imaging device (prism camera) 100 in accordance with the first embodiment in that the prism unit 61 includes a beam splitter 70 in place of the polarizers 32 and 33. In the imaging device (prism camera) 101 in accordance with the second embodiment, components having the same configurations as that of the imaging device (prism camera) 100 in accordance with the first embodiment have the same reference numerals, and the description thereof will be omitted as appropriate.

The second optical system 20a includes a fourth prism P21 and a third optical filter PSF1. In the second optical system 20a, the fourth prism P21 and the beam splitter 70 are disposed next to each other in this order, and the third optical filter PSF1 is disposed between the fourth prism P21 and the beam splitter 70. The third optical filter PSF1 is formed by vapor deposition on a transflective face P21b of the fourth prism P21. The third optical filter PSF1 may be a neutral density (ND) filter.

### [Operation of prism unit]

With reference to FIG. 6, the imaging device (prism camera) 101 in accordance with the second embodiment is disposed on the optical path L of the light emerging from a target object (not shown in the drawing).

The light from the target object (not shown in the drawing) propagates through a lens 10 on the optical path L and is incident on a light incident face P21a of the fourth prism P21 of the second optical system 20a.

The third optical filter PSF1 splits the light incident on the light incident face P21a of the fourth prism P21 into a fourth reflected light flux BL4 and a transmitted light flux. The fourth light flux BL4 is totally reflected on the incident prism P21a of the fourth prism P21 and then is emitted from a light emerging face P21c of the fourth prism P21.

For example, the third optical filter PSF1 emits 50% of the light incident on the light incident face P21a as a fourth light flux BL4 through the light emerging face P21c of the fourth prism P21. The third optical filter PSF1 transmits 50% of the light incident on the light incident face P21a of the fourth prism P21.

The third optical filter PSF1 reflects the fourth light flux BL4 to the light incident face P21a of the first prism P21, and the light incident face P21a of the fourth prism P21 totally reflects the fourth light flux BL4 (see region R in FIG. 6), to the exterior through the light emerging face P21c of the fourth prism P21.

The light incident face P21a of the fourth prism is coated with, for example, a metal layer to totally reflect the incident fourth light flux BL4.

The imaging device (prism camera) 101 in accordance with the second embodiment may have an air gap defined between the third optical filter PSF1 and the beam splitter 70. Regardless of the air gap, the third optical filter PSF1 can however transmit the light incident on the light incident face P21a of the fourth prism P21.

The beam splitter 70 includes a plate PT1 that splits the transmitted light into a P polarized light flux (transmitted light) and an S polarized light flux (reflected light). The P polarized light has a direction angle of 0° to the optical axis of the light incident face P21a of the fourth prism P21, while the S polarized light has a direction angle of 90° to the optical axis of the light incident face P21a of the fourth prism P21. The beam splitter 70 accordingly transmits the P polarized light through the plate PT1 but reflects the S polarized light on the plate PT1.

The polarizer 31 is disposed between the light incident face P21c of the fourth prism P21 and the solid-state image sensor 41, and transmits the fourth light flux BL4 from the light incident face P21c of the fourth prism P21 in a predetermined polarization direction (for example, 45°).

The solid-state image sensors 41, 44, and 45 convert the P polarized light (polarization direction of 0°), the S polarized light (polarization direction of 90°), and the transmitted light with a predetermined polarization direction (for example, 45°), respectively, into electrical signals.

The signal processing unit 50 receives electrical signals from the solid-state image sensors 41, 44, and 45 to generate a polarized light image.

With reference to FIG. 5 again, examples of the polarized light images taken with the imaging device (prism camera) 101 in accordance with the second embodiment will now be explained. FIG. 5 is a table illustrating an example polarized light image taken, by the imaging device (prism camera) 101 in accordance with the second embodiment. The imaging device (prism camera) 101 in accordance with the second embodiment has the same advantageous effects as that of the imaging device (prism camera) 100 in accordance with the first embodiment.

An example image before polarization is illustrated on the column "Before polarization" in FIG. 5. This image is an ordinary image captured by the imaging device (prism camera) 101.

The transmitted polarized light image with a polarization direction of 0° from the ordinary image is shown on the column "0°" of the column "Polarization direction". The transmitted polarized light image with a polarization direction of 90° from the ordinary image is also shown on the column "90°" of the column "Polarization direction". Furthermore, the transmitted polarized light image with a polarization direction of 45° from the ordinary image is shown on the column "45°" of the column "Polarization direction".

Although the polarized image shown on each "Image after polarization" corresponding to "Polarization direction" is the same as the outside image of the target object, the polarized image may be another image different from the outside image of the target object.

For example, the polarization direction of 0° indicates that only the component with a polarization direction of 0° can be extracted. In the case shown in the table, no polarized image is displayed. The polarization direction of 90° indicates that only the component with a polarization direction of 90° can be extracted. In the case shown in the table, a polarized image with a polarization component of 90° can be displayed. The polarization direction of 45° indicates that only the component with a polarization direction of 45° can be extracted. In the case shown in the table, no polarized image is displayed.

The imaging device (prism camera) 101 in accordance with the second embodiment can display, for example, a polarized light image that includes a component with a polarization direction of 0° and a polarized light image that includes a component with a polarization direction of 90°, or a polarized image that includes a component with a polarization direction of 90° and a polarized light image that includes a component with a polarization direction of 45°, shown in FIG. 5.

If a wrapped test sample is inspected, part of the light reflected from the surface wrap is extracted from a polarization direction to capture an image of the content in the wrap. In detail, the imaging device (prism camera) 101 in accordance with the second embodiment cab extract a component with a polarization direction from the reflected light to visualize the content in a transparent container. In an alternative embodiment, a polarized image with a predetermined polarization direction is extracted from the light reflected by a windshield of a vehicle. A person or persons in the vehicle can be observed from the polarized image, even if the windshield is dazzling with reflected light.

The imaging device (prism camera) 101 can also determine the shape of a wrap using transmitted polarized light in a predetermined direction from part of the reflected light. For example, the imaging device (prism camera) 101 can determine the shape of a transparent PET bottle using transmitted polarized light in a predetermined direction from part of the reflected light. The imaging device (prism camera) 101 can also capture an image of only foreign matter contained in a mass of cotton in inspection of the foreign matter.

Since the imaging device (prism camera) 101 of the second embodiment can capture two or more polarized light images with different polarization directions through one image taking operation, specific region(s) of the nonpolarized light image can be emphasized. The imaging device (prism camera) 101 in accordance with the second embodiment can thus determine the shape, distortion, and any other geometrical feature of the target object.

The imaging device (prism camera) 101 in accordance with the second embodiment can accordingly produce different images from different polarization directions using one image of a single target object.

As described above, the imaging device (prism camera) 101 in accordance with the second embodiment includes a beam splitter 70 and can convert the P polarized light (polarization direction of 0°), the S polarized light (polarization direction of 90°), and the transmitted light with a predetermined polarization direction (for example, 45°) into electrical signals.

The imaging device (prism camera) 101 in accordance with the second embodiment can capture different images with different polarization directions from a single target object, and thus can precisely and effectively determine the surface and geometric features of the target object.

### <3. Third embodiment (Example imaging device 3)>

The imaging device in accordance with a third embodiment of the present invention includes a color separation optical system, a beam splitter, a plurality of solid-state image sensors, and a signal processing unit. The color separation optical system includes a plurality of prisms and a plurality of wavelength selection filters. A fifth prism and a sixth prism of these prisms are disposed next to each other in this order. A first wavelength selection filter of these filters is disposed between the fifth prism and the sixth prism, and a second wavelength selection filter of these filters is disposed between the sixth prism and the beam splitter. The first wavelength selection filter splits light incident on a light incident face of the fifth prism into reflected light with a first wavelength region and transmitted light. The reflected light is totally reflected on the light incident face of the fifth prism and is emitted from a light emerging face of the fifth prism. The transmitted light, which has a wavelength region other than the first wavelength region, is incident on the second wavelength selection filter, which then splits the transmitted light into reflected light with a second wavelength region and transmitted light with a third wavelength region. The reflected light is totally reflected on a light incident face of the sixth prism and is emitted from a light emerging face of the sixth prism. The beam splitter splits the transmitted light with the third wavelength region into P polarized light and S polarized light. The reflected light with the first wavelength region, the reflected light with the second wavelength region, and the P polarized light, and the S polarized light are converted into electrical signals in the respective solid-state image sensors. The signal processing unit receives these electrical signals form the solid-state image sensors to generate a polarized light image.

Like the imaging device in accordance with the first and second embodiments, the imaging device in accordance with the third embodiment can capture different images with different polarization directions from a single target object, and thus can inspect the surface and geometrical feature of the target object more precisely and effectively.

The overall configuration of the imaging device in accordance with the third embodiment of the present invention is substantially the same as that of the imaging device in accordance with the first embodiment. It is noted that the beam splitter is a type of polarizer. In the following description, the light in the first wavelength region is the light in a short wavelength region containing a blue light component, the light in the second wavelength region is the light in a long wavelength region containing a red light component, and the light in the third wavelength region is the light in a middle wavelength region containing a green light component. Any other combination is also available. For example, the light in the first wavelength region may be light in a middle wavelength region containing a green light component, the light in the second wavelength region may be light in a short wavelength region containing a blue light component, and the light in the third wavelength region may be light in a long wavelength region containing a red light component.

### [Detail of prism unit]

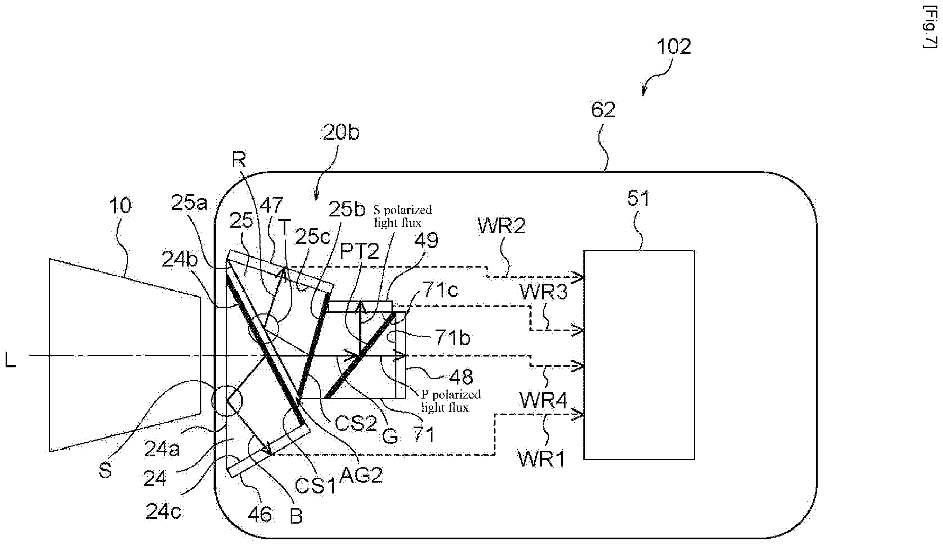

FIG. 7 is a schematic diagram of the imaging device (prism camera) 102 in accordance with the third embodiment of the present invention.

The imaging device (prism camera) 102 in accordance with the third embodiment includes a lens 10, and a prism unit 62. The prism unit 62 includes a color separation optical system 20b, a beam splitter 71, a plurality of solid-state image sensors 46, 47, 48, and 49, and a signal processing unit 51.

The imaging device (prism camera) 102 in accordance with the third embodiment differs from the imaging device (prism camera) 100 in accordance with the first embodiment in that the first optical system 20 is replaced with a color separation optical system 20b and a beam splitter 71 is disposed in the prism unit 62. In the imaging device (prism camera) 102 in accordance with the third embodiment, components having the same configurations as that of the imaging device (prism camera) 100 in accordance with the first embodiment have the same reference numerals, and the description thereof will be omitted as appropriate.

The color separation optical system 20b includes two prisms (a fifth prism 24 and a sixth prism 25) and two wavelength selection filters (a first wavelength selection filter CS1 and a second wavelength selection filter CS2).

In the color separation optical system 20b, the fifth prism 24 and the sixth prism 25 are disposed next to each other in this order, the first wavelength selection filter CS1 is disposed between the fifth prism 24 and the sixth prism 25, and the second wavelength selection filter CS2 is disposed between the sixth prism 25 and the beam splitter 71.

The first wavelength selection filter CS1 is formed by vapor deposition on a transflective face 24b of the fifth prism 24, and the second wavelength selection filter CS2 is formed by vapor deposition on a transflective face 25b of the sixth prism 25. The first wavelength selection filter CS1 and the second wavelength selection filter CS2 are each composed of a dichroic film.

### [Operation of prism unit]

With reference to FIG. 7, the imaging device (prism camera) 102 in accordance with the third embodiment is disposed on the optical path L of the light emerging from a target object (not shown in the drawing).

The light from the target object (not shown in the drawing) propagates through a lens 10 on the optical path L and is incident on a light incident face 24a of the fifth prism 24 of the color separation optical system 20b.

The first wavelength selection filter CS1 splits the light incident on the light incident face 24a of the fifth prism 24 into a first reflected light flux B in a first wavelength region (a short wavelength region containing a blue light component) and a transmitted light flux in a middle wavelength region containing a green light component. The reflected light is totally reflected on a light incident face 24a of the fifth prism 24 and is emitted from a light emerging face 24c of the fifth prism 24.

In detail, the first wavelength selection filter CS1 reflects a short wavelength light beam B containing a blue light component to the light incident face 24a of the fifth prism 24. The short wavelength light flux B containing the blue light component is totally reflected on the light incident face 24a (see the region S in FIG. 7) of the fifth prism 24 and then is emitted from the light emerging face 24c of the fifth prism 24.

The light incident face 24a of the fifth prism is coated with, for example, a metal layer to totally reflect the short wavelength light flux B containing the blue light component.

The second wavelength selection filter CS2 splits the transmitted light flux (in a long to middle wavelength region containing green and red light component) into a transmitted light flux G in a middle wavelength region containing a green light component and a reflected light flux R in a long wavelength region containing a red light component. The reflected light flux R is totally reflected on a light incident face 25a of the sixth prism 25 and is emitted from a light emerging face 25c of the sixth prism 25.

An air gap AG2 is defined between the first wavelength selection filter CS1 and sixth prism 25.

In such a case, the second wavelength selection filter CS2 reflects a light flux in a second wavelength region (long wavelength light containing a red light component) R to the light incident face 25a of the sixth prism 25, and the light incident face 25a of the sixth prism 25 totally reflects the light flux R in a second wavelength region (long wavelength light containing a red light component) (see the region T in FIG. 7) and emits the flux R through the light emerging face 25c of the sixth prism 25 to the exterior.

The light incident face 25a of the sixth prism is coated with a metal film that can totally reflect the incident long wavelength light flux R containing a red light component.

The beam splitter 71 includes a plate PT2 that splits the transmitted third wavelength light flux (green light in the middle wavelength region) G into P polarized light and S polarized light.

The solid-state image sensors 46, 47, 48, and 49 convert the P polarized light and the S polarized light divided by the beam splitter 71, the light flux B in the first wavelength region (short wavelength light flux containing a blue light component), and the light flux R in a second wavelength region (long wavelength light flux containing a red light component), respectively, into electrical signals.

The signal processing unit 51 receives the electrical signals from the solid-state image sensors 46, 47, 48, and 49 to generate polarized light images.

With reference to FIG. 5, examples of the polarized light images taken with the imaging device (prism camera) 102 in accordance with the third embodiment will now be explained. The imaging device (prism camera) 102 in accordance with the third embodiment has the same advantageous effects as that of the imaging device (prism camera) 100 in accordance with the first embodiment.

An example image before polarization is illustrated on the column "Before polarization" in FIG. 5. This image is an ordinary image captured by the imaging device (prism camera) 102.

The transmitted polarized light image with a polarization direction of 0° (P polarized light waves) from the ordinary image is shown on the column "0°" of the column "Polarization direction". The transmitted polarized light image with a polarization direction of 90° (S polarized light waves) from the ordinary image is also shown on the column "90°" of the column "Polarization direction".

Although the polarized image shown on each "Image after polarization" corresponding to "Polarization direction" is the same as the outside image of the target object, the polarized image may be another image different from the outside image of the target object.

For example, the polarization direction of 0° indicates that only the component with a polarization direction of 0° can be extracted. In the case shown in the table, no polarized image is displayed. The polarization direction of 90° indicates that only the component with a polarization direction of 90° can be extracted. In the case shown in the table, a polarized image with a polarization component of 90° can be displayed.

The imaging device (prism camera) 102 in accordance with the third embodiment can display, for example, a polarized light image that includes a component with a polarization direction of 0° and a polarized light image that includes a component with a polarization direction of 90° at the same time, shown in FIG. 5.

If a wrapped test sample is inspected, part of the light reflected from the surface wrap is extracted from a polarization direction to capture an image of the content in the wrap. In detail, the imaging device (prism camera) 102 in accordance with the third embodiment cab extract a component with a polarization direction from the reflected light to visualize the content in a transparent container. In an alternative embodiment, a polarized image with a predetermined polarization direction is extracted from the light reflected by a windshield of a vehicle. A person or persons in the vehicle can be observed from the polarized image, even if the windshield is dazzling with reflected light.

The imaging device (prism camera) 102 can also determine the shape of a wrap using transmitted polarized light in a predetermined direction from part of the reflected light. For example, the imaging device (prism camera) 102 can determine the shape of a transparent PET bottle using transmitted polarized light in a predetermined direction from part of the reflected light. The imaging device (prism camera) 102 can also capture an image of only foreign matter contained in a mass of cotton in inspection of the foreign matter.

Since the imaging device (prism camera) 102 of the third embodiment can capture two or more polarized light images with different polarization directions through one image taking operation, specific region(s) of the nonpolarized light image can be emphasized. The imaging device (prism camera) 102 in accordance with the third embodiment can thus determine the shape, distortion, and any other geometrical feature of the target object.

The imaging device (prism camera) 102 in accordance with the third embodiment can accordingly produce different images from different polarization directions using one image of a single target object.

As described above, the imaging device (prism camera) 102 in accordance with the third embodiment includes a color separation optical system 20b and a beam splitter 71 and can separate the light from the target object into different color components and generate a polarized light image of P polarized light (polarization direction of 0°) and a polarized light image of S polarized light (polarization direction of 90°).

The imaging device (prism camera) 102 in accordance with the third embodiment can capture a P polarized light image, an S polarized light image, and a color image from a single target object, and thus can precisely and effectively determine the surface and geometric features of the target object.

The imaging device (prism camera) 102 in the third embodiment has an air gap AG2 defined between the first wavelength selection filter CS1 and the sixth prism 25. However, the air gap is not essential. Thus, the imaging device (prism camera) 102 in accordance with the third embodiment may have no air gap AG2 between the first wavelength selection filter CS1 and the sixth prism 25. In such a case, the light incident face 25a of the sixth prism is coated with a metal film that can totally reflect the light flux R in a second wavelength region (long wavelength light containing a red light component).

The first to third embodiments in accordance with the present invention can be modified in various ways without departing from the gist of the present invention. For example, the first to third embodiments can be performed in combination. In specific, the concept of the first embodiment is applied to the second embodiment or the third embodiment.

The advantageous effects described in the present specification are merely examples and a person skilled in the art will find any other advantageous effect.

The present invention includes the following aspects:
(1) An imaging device comprising:
   a first optical system;
   a plurality of polarizers;
   a plurality of solid-state image sensors; and
   a signal processing unit,
   the first optical system comprising:
      a plurality of prisms including a first prism, a second prism, and a third prism; and
      a plurality of optical filters including a first optical filter and a second optical filter, wherein
      the first prism, a second prism, and a third prism are disposed next to each other in this order, each prism has a light incident face, a transflective face, and a light emerging face,
      the first optical filter is disposed between the first prism and the second prism,
      the second optical filter is disposed between the second prism and the third prism,
      the first optical filter splits light incident on the light incident face of the first prism into a first reflected light flux and a first transmitted light flux, the first reflected light flux is oriented to the light incident face of the first prism, is totally reflected on the light-incident face, and is emitted through the light emerging face of the first prism, and the first transmitted light flux passes through the first optical filter,
      the second optical filter splits the first transmitted light flux incident on the light incident face of the second prism into a second reflected light flux and a third transmitted light flux, the second light flux is oriented to the light incident face of the second prism, is totally reflected on the light incident face of the second prism, and is emitted through the light emerging face of the second prism, and the third transmitted light flux passes through the second optical filter and the light emerging face of the third prism,
      the polarizers are disposed between the respective solid-state image sensors and the light emerging faces of the respective prisms, and transmit the light fluxes emerging from the respective light emerging faces to different polarization directions,
      the solid-state image sensors convert the respective transmitted light fluxes from the respective polarizers into electrical signals, and
      the signal processing unit receives the electrical signals from the respective solid-state image sensors to generate polarized light images.
(2) The imaging device set forth in Aspect (1), wherein the different polarization directions include 0°, 45°, and 90°.
(3) The imaging device set forth in Aspect (1) or (2), wherein the polarizers comprise three polarizers.
(4) The imaging device set forth in any one of Aspects (1) to (3), further comprising an air gap defined between the first optical filter and the second prism.
(5) The imaging device set forth in Aspect (4), wherein the second optical filter orients the second light flux to the light incident face of the second prism, and
   the second prism totally reflects the second incident light flux on the light incident face and emits the reflected light flux through the light emerging face of the second prism.
(6) The imaging device set forth in any one of Aspects (1) to (3), wherein no air gap is defined between the first optical filter and the second prism.
(7) The imaging device set forth in any one of Aspects (1) to (6), wherein the first optical filter orients the first light flux to the light incident face of the first prism, and
   the first prism totally reflects the first incident light flux on the light incident face and emits the reflected light flux through the light emerging face of the first prism.
(8) The imaging device set forth in any one of Aspects (1) to (7), wherein
   the first optical filter is vapor deposited on the transflective face of the first prism, and
   the second optical filter is vapor deposited on the transflective face of the second prism.
(9) An imaging device comprising:
   a second optical system;
   at least one polarizer;
   a beam splitter;
   a plurality of solid-state image sensors; and
   a signal processing unit,
   the second optical system comprising a fourth prism having a light incident face, a light emerging face and a transflective face, and a third optical filter,
   the fourth prism and the beam splitter are disposed next to each other in this order,
   the third optical filter is disposed between the fourth prism and the beam splitter,
   the third optical filter splits light incident on the light incident face of the fourth prism into a fourth reflected light flux and a fourth transmitted light flux, the fourth reflected light flux is oriented to the light incident face of the fourth prism, is totally reflected on the light incident face, and is emitted through the light emerging face of the fourth prism,
   the beam splitter splits the fourth transmitted light flux into P polarized light and S polarized light,
   the polarizer is disposed between the light emerging face of the fourth prism and one of the solid-state image sensors, and transmits the fourth light flux from the light emerging face in a predetermined polarization direction,
   each of the solid-state image sensors converts one of the P polarized light, the S polarized light, and the transmitted light with a predetermined polarization direction to electrical signals,
   the signal processing unit receives the electrical signals from the respective solid-state image sensors to generate polarized light images.
(10) The imaging device set forth in Aspect (9), wherein
   the third optical filter orients the fourth light flux to the light incident face of the fourth prism,
   the fourth prism totally reflects the fourth incident light flux on the light incident face and emits the reflected light flux through the light emerging face of the fourth prism.
(11) The imaging device set forth in Aspect (9) or (10), wherein
   the P polarized light has a polarization angle of 0° to the optical axis of the fourth prism, and
   the S polarized light has a polarization angle of 90° to the optical axis of the fourth prism.
(12) An imaging device, comprising:
   a color separation optical system;
   a beam splitter;
   a plurality of solid-state image sensors; and
   a signal processing unit, wherein
   the color separation optical system includes a plurality of prisms including a fifth prism and a sixth prism, and a plurality of wavelength selection filters including a first wavelength selection filter and a second wavelength selection filter,
   the fifth prism and the sixth prism are disposed next to each other in this order, each prism has a light incident face, a transflective face, and a light emerging face,
   the first wavelength selection filter is disposed between the fifth prism and the sixth prism,
   the second wavelength selection filter is disposed between the sixth prism and the beam splitter,
   the first wavelength selection filter splits light incident on the light incident face of the fifth prism into a reflected light flux in a first wavelength region and a transmitted light flux, the reflected light flux in the first wavelength region is oriented to the light incident face of the fifth prism, is reflected on the light incident face of the fifth prism, and is emitted through the light emerging face of the fifth prism, and the first wavelength selection filter transmits the transmitted light flux in a wavelength region other than the first wavelength region,
   the second wavelength selection filter splits the transmitted light flux into a reflected light flux in a second wavelength region and a transmitted light flux in a third wavelength region, the reflected light flux in the second wavelength region is reflected on the light incident face of the sixth prism and is emitted through the light emerging face of the sixth prism, while the second wavelength selection filter transmits the transmitted light in the third wavelength region,
   the beam splitter splits the transmitted light in the third wavelength region into P polarized light and S polarized light,
   each of the solid-state image sensors converts one of the P polarized light, the S polarized light, the light flux in the first wavelength region, and the light flux in the second wavelength region to electrical signals, and
   the signal processing unit receives the electrical signals from the respective solid-state image sensors to generate polarized light images.
(13) The imaging device set forth in Aspect (12), wherein
   the first wavelength selection filter orients the light flux in the first wavelength region to the light incident face of the fifth prism,
   the fifth prism totally reflects the light flux in the first wavelength region on the light incident face and emits the light flux in the first wavelength region through the light emerging face of the fifth prism.
(14) The imaging device set forth in Aspects (12) or (13), wherein
   the second wavelength selection filter orients the light flux in a second wavelength region to the light incident face of the sixth prism, and
   the sixth prism totally reflects the light flux in the second wavelength region on the light incident face, and emits the reflected light through the light emerging face of the sixth prism.
(15) The imaging device set forth in any one of Aspects (12) to (14), further comprising an air gap defined between the first wavelength selection filter and the sixth prism.
(16) The imaging device set forth in any one of Aspects (12) to (15), wherein
   the first wavelength selection filter is vapor deposited on the transflective face of the fifth prism, and
   the second wavelength selection filter is vapor deposited on the transflective face of the sixth prism.
(17) The imaging device set forth in any one of Aspects (12) to (16), wherein
   the light flux in the first wavelength region is a light flux in a short wavelength region containing a blue light component,
   the light flux in the second wavelength region is a light flux in a long wavelength region containing a red light component, and
   the light flux in the third wavelength region is a light flux in a middle wavelength region containing a green light component.
(18) The imaging device set forth in any one of Aspects (1) to (17), wherein
   the solid-state image sensor comprises a line sensor or an area sensor.

### Reference Numerals

- 10: lens
- 20: first optical system
- 20a: second optical system
- 21: first prism
- 22: second prism
- 23: third prism
- P21: fourth prism
- 24: fifth prism
- 25: sixth prism
- 22, 23, 24, 25: first prism
- 31, 32, 33: polarizer
- 41, 42, 43: solid-state image sensor
- 44, 45, 46: solid-state image sensor
- 50: signal processing unit
- 60, 60a, 60b: prism unit
- 70, 71: beam splitter
- B: short wavelength light flux containing blue light component
- R: long wavelength light flux containing red light component
- G: middle wavelength light flux containing green light component
- BL1: first light flux
- BL2: second light flux
- BL3: third light flux
- BL4: fourth light flux
- SF1, SF1a: first optical filter
- SF2: second optical filter
- PSF1: third optical filter
- PT1, PT2: plate
- CS1: first wavelength selection filter
- CS2: second wavelength selection filter

## Claims

1. An imaging device comprising:
a first optical system;
a plurality of polarizers;
a plurality of solid-state image sensors; and
a signal processing unit,
the first optical system comprising:
a plurality of prisms including a first prism, a second prism, and a third prism; and
a plurality of optical filters including a first optical filter and a second optical filter, wherein
the first prism, a second prism, and a third prism are disposed next to each other in this order, each prism has a light incident face, a transflective face, and a light emerging face,
the first optical filter is disposed between the first prism and the second prism,
the second optical filter is disposed between the second prism and the third prism,
the first optical filter splits light incident on the light incident face of the first prism into a first reflected light flux and a first transmitted light flux, the first reflected light flux is oriented to the light incident face of the first prism, is totally reflected on the light incident face, and is emitted through the light emerging face of the first prism, and the first transmitted light flux passes through the first optical filter,
the second optical filter splits the first transmitted light flux incident on the light incident face of the second prism into a second reflected light flux and a third transmitted light flux, the second light flux is oriented to the light incident face of the second prism, is totally reflected on the light incident face of the second prism, and is emitted through the light emerging face of the second prism, and the third transmitted light flux passes through the second optical filter and the light emerging face of the third prism,
the polarizers are disposed between the respective solid-state image sensors and the light emerging faces of the respective prisms, and transmit the light fluxes emerging from the respective light emerging faces to different polarization directions,
the solid-state image sensors convert the respective transmitted light fluxes from the respective polarizers into electrical signals, and
the signal processing unit receives the electrical signals from the respective solid-state image sensors to generate polarized light images.

2. The imaging device set forth in claim 1, wherein the different polarization directions include 0°, 45°, and 90°.

3. The imaging device set forth in claim 1 or 2, wherein the polarizers comprise three polarizers.

4. The imaging device set forth in any one of claims 1 to 3, further comprising an air gap defined between the first optical filter and the second prism.

5. The imaging device set forth in claim 4, wherein the second optical filter orients the second light flux to the light incident face of the second prism, and
the second prism totally reflects the second incident light flux on the light incident face and emits the reflected light flux through the light emerging face of the second prism.

6. The imaging device set forth in any one of claims 1 to 3, wherein no air gap is defined between the first optical filter and the second prism.

7. The imaging device set forth in any one of claims 1 to 6, wherein the first optical filter orients the first light flux to the light incident face of the first prism, and
the first prism totally reflects the first incident light flux on the light incident face and emits the reflected light flux through the light emerging face of the first prism.

8. The imaging device set forth in any one of claims 1 to7, wherein
the first optical filter is vapor deposited on the transflective face of the first prism, and
the second optical filter is vapor deposited on the transflective face of the second prism.

9. An imaging device comprising:
a second optical system;
at least one polarizer;
a beam splitter;
a plurality of solid-state image sensors; and
a signal processing unit,
the second optical system comprising a fourth prism having a light incident face, a light emerging face and a transflective face, and a third optical filter,
the fourth prism and the beam splitter are disposed next to each other in this order,
the third optical filter is disposed between the fourth prism and the beam splitter,
the third optical filter splits light incident on the light incident face of the fourth prism into a fourth reflected light flux and a fourth transmitted light flux, the fourth reflected light flux is oriented to the light incident face of the fourth prism, is totally reflected on the light incident face, and is emitted through the light emerging face of the fourth prism,
the beam splitter splits the fourth transmitted light flux into P polarized light and S polarized light,
the polarizer is disposed between the light emerging face of the fourth prism and one of the solid-state image sensors, and transmits the fourth light flux from the light emerging face in a predetermined polarization direction,
each of the solid-state image sensors converts one of the P polarized light, the S polarized light, and the transmitted light with a predetermined polarization direction to electrical signals,
the signal processing unit receives the electrical signals from the respective solid-state image sensors to generate polarized light images.

10. The imaging device set forth in claim 9, wherein
the third optical filter orients the fourth light flux to the light incident face of the fourth prism,
the fourth prism totally reflects the fourth incident light flux on the light incident face and emits the reflected light flux through the light emerging face of the fourth prism.

11. The imaging device set forth in claim 9 or 10, wherein
the P polarized light has a polarization angle of 0° to the optical axis of the fourth prism, and
the S polarized light has a polarization angle of 90° to the optical axis of the fourth prism.

12. An imaging device, comprising:
a color separation optical system;
a beam splitter;
a plurality of solid-state image sensors; and
a signal processing unit, wherein
the color separation optical system includes a plurality of prisms including a fifth prism and a sixth prism, and a plurality of wavelength selection filters including a first wavelength selection filter and a second wavelength selection filter,
the fifth prism and the sixth prism are disposed next to each other in this order, each prism has a light incident face, a transflective face, and a light emerging face,
the first wavelength selection filter is disposed between the fifth prism and the sixth prism,
the second wavelength selection filter is disposed between the sixth prism and the beam splitter,
the first wavelength selection filter splits light incident on the light incident face of the fifth prism into a reflected light flux in a first wavelength region and a transmitted light flux, the reflected light flux in the first wavelength region is oriented to the light incident face of the fifth prism, is reflected on the light incident face of the fifth prism, and is emitted through the light emerging face of the fifth prism, and the first wavelength selection filter transmits the transmitted light flux in a wavelength region other than the first wavelength region,
the second wavelength selection filter splits the transmitted light flux into a reflected light flux in a second wavelength region and a transmitted light flux in a third wavelength region, the reflected light flux in the second wavelength region is reflected on the light incident face of the sixth prism and is emitted through the light emerging face of the sixth prism, while the second wavelength selection filter transmits the transmitted light in the third wavelength region,
the beam splitter splits the transmitted light in the third wavelength region into P polarized light and S polarized light,
each of the solid-state image sensors converts one of the P polarized light, the S polarized light, the light flux in the first wavelength region, and the light flux in the second wavelength region to electrical signals, and
the signal processing unit receives the electrical signals from the respective solid-state image sensors to generate polarized light images.

13. The imaging device set forth in claim 12, wherein
the first wavelength selection filter orients the light flux in the first wavelength region to the light incident face of the fifth prism,
the fifth prism totally reflects the light flux in the first wavelength region on the light incident face and emits the light flux in the first wavelength region through the light emerging face of the fifth prism.

14. The imaging device set forth in claim 12 or 13, wherein
the second wavelength selection filter orients the light flux in a second wavelength region to the light incident face of the sixth prism, and
the sixth prism totally reflects the light flux in the second wavelength region on the light incident face, and emits the reflected light through the light emerging face of the sixth prism.

15. The imaging device set forth in any one of claims 12 to 14, further comprising an air gap defined between the first wavelength selection filter and the sixth prism.

16. The imaging device set forth in any one of claims 12 to 15, wherein
the first wavelength selection filter is vapor deposited on the transflective face of the fifth prism, and
the second wavelength selection filter is vapor deposited on the transflective face of the sixth prism.

17. The imaging device set forth in any one of claims 12 to 16, wherein
the light flux in the first wavelength region is a light flux in a short wavelength region containing a blue light component,
the light flux in the second wavelength region is a light flux in a long wavelength region containing a red light component, and
the light flux in the third wavelength region is a light flux in a middle wavelength region containing a green light component.

18. The imaging device set forth in any one of claims 1 to 17, wherein
the solid-state image sensor comprises a line sensor or an area sensor.
